# EUROPEAN PATENT SPECIFICATION

(11) **EP 1 935 189 B1**
(45) Date of publication and mention of the grant of the patent: **21.12.2016**
(21) Application number: 06816913.5
(22) Date of filing: 11.10.2006
(51) Int. Cl.: H04W 28/14, H04W 36/02

(54) **PACKET LOSS PREVENTION DURING HANDOFF THROUGH MANAGED BUFFER NODES**
PAKETVERLUSTVERHINDERUNG WÄHREND DER WEITERREICHUNG DURCH VERWALTETE PUFFERKNOTEN
PREVENTION DE LA PERTE DE PAQUETS PENDANT LE TRANSFERT VIA LES NOEUDS TAMPONS GERES

(30) Priority: 11.10.2005 US 596660 P; 11.07.2006 US 456807
(43) Date of publication of application: 25.06.2008
(73) Proprietor: Telcordia Technologies, Inc., Piscataway, NJ 044157 (US); Kabushiki Kaisha Toshiba, Minato-ku, Tokyo 105-8001 (JP)
(72) Inventor: YAQUB, Raziq, Stewartsville, NJ 08886 (US)
(74) Representative: Weickmann & Weickmann PartmbB
(86) International application number: PCT/US2006/040161
(87) International publication number: WO 2007/044914

(56) References cited:
- WO-A2-2005/070106
- US-A1- 2002 161 919
- US-A1- 2004 003 126
- US-A1- 2005 005 024
- US-A1- 2005 122 986
- US-A1- 2005 216 770

## Description

### BACKGROUND

### Field of the Invention

The present invention relates generally to wireless networking, and, in some preferred embodiments to the prevention of lost packets due to network layer and link layer transition.

### General Background Discussion:

A mobile network seeks to provide security, smooth handoff, minimal data loss and minimal delay. Many of the existing networks involve communication between a Mobile Node (MN) and a Buffering Node (BN). Buffering Service in these cases is inefficient as it requires the MN to explicitly solicit the service. As a result, the amount of wireless signaling traffic is great, and the MN's energy usage is also great, reducing the amount of energy available for sending and receiving messages until a consensus is reached.

Some of the drawbacks of the existing networks are detailed below.

One drawback pertains to an extension to the IUv6 Router, which calls for a router to advertise its ability to support buffering, and which requires the MN to beg the Buffering Node for its desired buffer size, requiring a high volume of messages. This high volume of messages pertaining to BN discovery, as well as probes and responses concerning the service and service negotiation not only consumes scarce network resources, but also adds additional latency to the network.

Another drawback pertains to buffer size. Once a MN receives an advertised indication that Buffering Services are available, the MN may request a specific buffer size. Depending on available resources, the BN may or may not accept this request. Likely, the BN is constrained by a buffer protocol, in which case, if the MN request exceeds the upper limit, the BN may offer a smaller buffer size. Further, if the BN is critically low in available resources, it will send messages back and forth to the MN in an attempt to find an agreeable buffer size, attempting to arrive at a compromise position. In spite of this negotiation, the end result of the requests may be a denial of service. This process leads one to conclude that the BN is in control, and that the MN has no option to protect the packets of data it is trying to send to the BN. As the MN has no other alternative in the event the BN denies service, the MN does not establish communications with the BN or waste its time and energy.

Another drawback occurs when the router cannot accept new requests for buffering, due to resource shortages, but still continues to advertise its capability of buffering and then replying negatively to initialization requests. The router does not have the ability to stop advertising when it is unable to provide buffering because this will adversely affect the handoff operation. This situation creates an unnecessary burden on the network and is illogical as well - advertising services while being unable to provide them.

Another drawback is concerned with the network awareness of the movement of the MN with regard to buffering control protocols in Network Controlled Mobile Assisted (NCMA) handoff mode. In this situation, the previous router supplies the new router with current state information for the MN before the handoff actually occurs and also directs the buffered packets to the new router without the MN's intervention. The MN is thus not required to negotiate with the network and explicitly request initialization of the buffering state and subsequent buffered packet forwarding. However, in many cases, the MN still has to negotiate because the protocols require the MN to do so. Therefore, even in a NCMA case, the MN will always have to issue a Smooth Handoff Initialization (SHIN) to the new router, because it has received a router advertisement for service.

Yet another drawback is directed towards the Buffering Control Protocols requiring the MN to send an anticipated buffer size and time duration for buffer usage. Since Internet Protocol (IP) traffic is of a bursty nature; that is, a continuous transfer of data without interruption from one device to another, any MN estimation may not be accurate, which results in either over- or underestimating the pre-buffering size. Even if an accurate estimation is made by the MN, the buffer size demanded by the MN may not be immediately available, but may become available only moments later, when the BN has completed servicing other MN(s). This instantaneous decision (to accept, deny, or compromise) is based solely on the conditions present at that instant, without regard to conditions in the near future.

Still another drawback is the occurrence of a "time-limited timeout" condition that affects the efficient performance of both the MN as well as the BN since the BN automatically stops buffering without receiving any message (i.e., BReq[stop]) from the MN. In fact, the BReq[stop] message serves a double purpose. First, it stops the buffering event; and second, it informs the BN of the new CoA (Care of Address). In the event of a time-limited timeout, the BN stops buffering without receiving a BReq[stop] message and without receiving the flushing destination (CoA). In order to overcome this situation, the MN must send a separate message "BReq[ext]" to inform the BN, the new CoA, and request an extension of buffering time. If this situation occurs repeatedly, the BN will have received multiple CoAs (though it will use the last CoA for flushing the data packets). This entire situation is undesirable due to the required increased signaling burden and wasted memory required to hold the redundant information of several CoAs. Also, since there is a requirement on the MN to send BReq[ext] messages before the end of the time-limited timeout period, the MN battery life is adversely affected.

A method for buffering is disclosed in document US2005/0122986 A1.

In view of the foregoing, an improved buffering service is needed in the wireless network art, which includes a complete architecture harnessed to provide a comprehensive buffering service that offers packet loss prevention to packets in transit during handoffs. More particularly, the improved buffering service of the present invention provides a well-managed buffering architecture harnessed to provide maximum buffer size that best meets the needs of MNs without solicitations or negotiations; reserves buffer size based on multiple factors, including MN's current application, network speed in which MN is roaming, and near future demand and resource predictions; is completely autonomous so that the BNs perform their tasks by communicating amongst other peer BNs and network entities without involving assistance from the MN; can be implemented without introducing new protocols that would enable MNs to communicate with the network for this specific service.

### SUMMARY OF THE PREFERRED EMBODIMENTS

The preferred embodiments of the present invention can significantly improve upon the prior art and provide a solution to the problem of an improved buffering service is needed in the wireless network art, which includes a complete architecture harnessed to provide a comprehensive buffering service that offers packet loss prevention to packets in transit during handoffs.

According to one aspect of the present invention, a managed buffer nodes architecture is provided, including the following functional entities: a Controlling Buffer Node (CBN); a Transition Buffer Node (TBN); and a Flushing Buffer Node (FBN). The controlling buffer node performs managerial functions; the transition buffer node holds data packets in transit; and the flushing buffer node facilitates the delivery of data packets. Further, in this embodiment of the present invention, these nodes communicate with each other internally (i.e., no direct communication with external elements e.g., MN), and are less prone to security incursions. The access point (AP) plays a controlling role with a special ability to communicate with APs.

According to one aspect of the present invention, a CBN is provided that is a controlling authority and performs multiple functions: the CBN will be capable of receiving a copy of a EAPOL-Start (Extensible Authorization Protocol Over Lan) message from the AP where the MN is currently located, and extract information; be capable of retrieving, from its own database, the IP address of the TBN and direct the TBN to start buffering; be capable of receiving a copy of a binding update from MN through the previous router, to extract a new CoA of MN in a new network; and be capable of collecting information from TBNs and FBNs for management purposes.

According to one embodiment of the present invention, the TBN will be capable of performing multiple functions, including: receiving a message from the CBN indicating that the MN will handoff; allocating appropriate Buffer Lease Time (BLT), further determined by the user's application, currently available resources, and data rate; extending BLT if required; running compression algorithms to efficiently allocate memory capacity; receiving a second message from the CBN that the MN has completed handoff; draining the buffer packets in the event the service is not delivered successfully; storing the received packets according to the applications; assisting CBN in performing management functions; informing the assisting CBN in performing management functions.

According to one embodiment of the present invention, the Flushing Buffer Node (FBN) will be capable of performing multiple functions, including: acting as a tunnel termination point - receiving packets from the TBN; decapsulating the packets and dispatching them to the AP immediately for further transmission to the MN; receiving packets from peer buffering nodes.

According to another embodiment of the present invention, the CBN, after receiving the destination address of the AP, issues a "release buffer" trigger to the TBN to initiate tunneling packets to the specific FBN. IP addresses to the CBN, TBN, and FBN can be either statically or dynamically assigned, as well as private and not visible outside the network for additional security.

According to another embodiment of the present invention, an ARIMA (autoregressive integrated moving average) model is used to predict the buffering resource demand and then apply the model to predict future buffering resource demand, whereby each CBN is able to accurately, precisely and efficiently predict and reserve a sufficient amount of buffering resources.

### BRIEF DESCRIPTION OF THE DRAWINGS

The preferred embodiments of the present invention are shown by way of example, and not limitation, in the accompanying figures, in which:
Figure 1 is a diagram of a managed buffer nodes architecture, in accordance with an embodiment of the present invention;
Figure 2(a) is a diagram of controller buffer node tasks, in accordance with an embodiment of the present invention;
Figure 2(b) is a table constructed by BNC as per tasks of Figure 1(a), in accordance with an embodiment of the present invention;
Figure 3(a) is a diagram of transit buffer node tasks, in accordance with an embodiment of the present invention;
Figure 3(b) is a chart of processor functions, in accordance with an embodiment of the present invention; and
Figure 4 is a diagram of flushing buffering node (FBN) tasks, in accordance with an embodiment of the present invention.

### DETAILED DESCRIPTION OF THE PREFERRED EMBODIMENTS

While the present invention may be embodied in many different forms, the illustrative embodiments are described herein with the understanding that the present disclosure is to be considered as providing examples of the principles of the invention and that such examples are not intended to limit the invention to preferred embodiments described herein and/or illustrated herein.

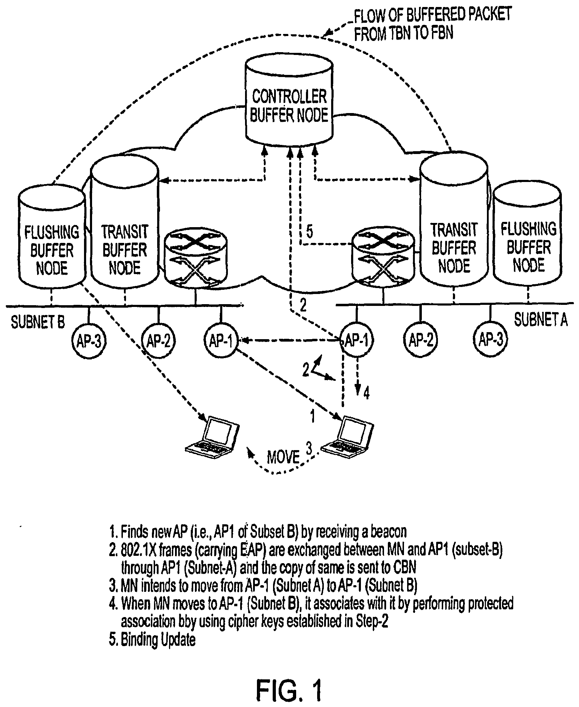

Figure 1 illustrates an overview of a managed buffer nodes architecture according to an embodiment of the present invention. The architecture consists of the following functional entities: Controlling Buffer Node (CBN); Transit Buffer Node (TBN); and Flushing Buffer Node (FBN). Each entity, or node, as a specific task. For example, the CBN performs managerial functions, the TBN retains packets in transit; and the FBN facilitates the delivery of packets. For improved security, these nodes communicate with each other internally. This approach diminishes the risk from external security attacks, as no external elements are in communication with the nodes. The Access Point (AP), which has a controlling function, also has the special capability of communicating with other APs. The specific tasks of each node is detailed below.

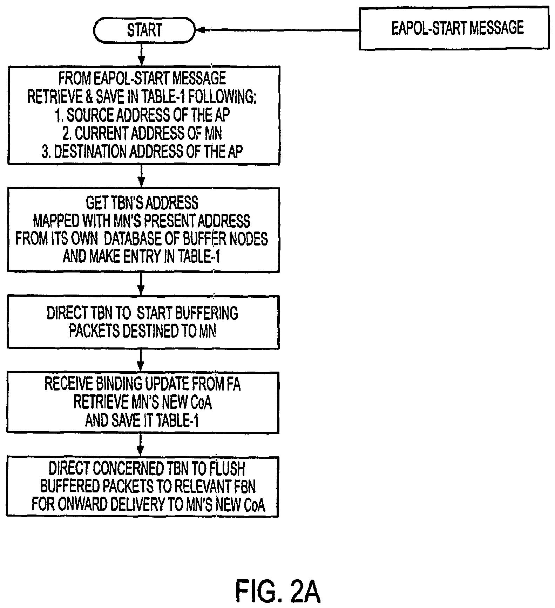

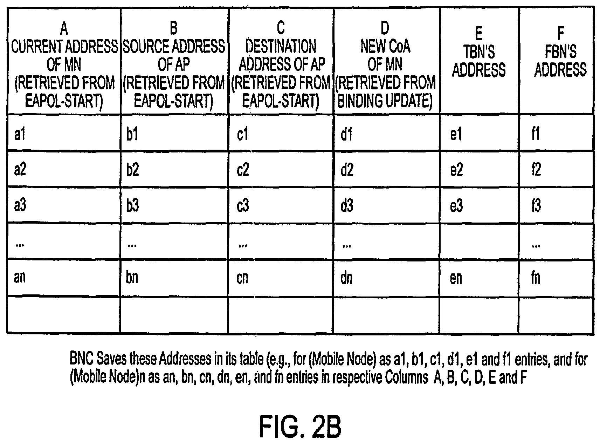

The Controlling Buffer Node (CBN) primary task is as the control authority. As shown in Fig. 2, the CBN receives a copy of the EAPOL-Start message from the Access Point (AP) reporting on the Mobile Node (MN) location (i.e. before moving to a new network). After receiving this message, the CBN extracts the following information, which is saved in its own directory: source address of the AP (from which the EAPOL-Start message is received); current address of the MN (assigned to the network where the MN is presently located); destination address of the AP (for which the MN has requested pre-authentication and intends to move to).

The CBN receives and processes various information, including the IP address of the TBN serving the network where the MN is presently located. The CBN will then instruct this TBN (associated with the MN) to initiate buffering. The instruction will be issued to the TBN at the receipt of the EAPOL-Start message from the MAC Layer Management Entity (MLME) of the access point in which the MN is located.

Further, the CBN receives a copy of the binding update from the MN through a previous router (or foreign agent in case of IPv4). After receiving the binding update message, the CBN extracts a new address (also called a new CoA) of the MN in a new network, after the MN has moved to the new network.

The CBN also retrieves the IP address of the correct FBN from its own database of FBNs duly mapped with address received in the binding update, which binds, or registers, the MN's CoA with the MN's home address.

In yet another function, the CBN collects information from TBNs and FBNs for management functions. The CBN management is dictated by the policy desired; therefore, the user may direct the CBN to collect information in about a variety of information, including available capacity, used capacity, and predicted demand, from the TBN and FBN recurrently. The CBN will then use this information to insure an efficiently managed network as well as for load balancing to achieve optimum buffering.

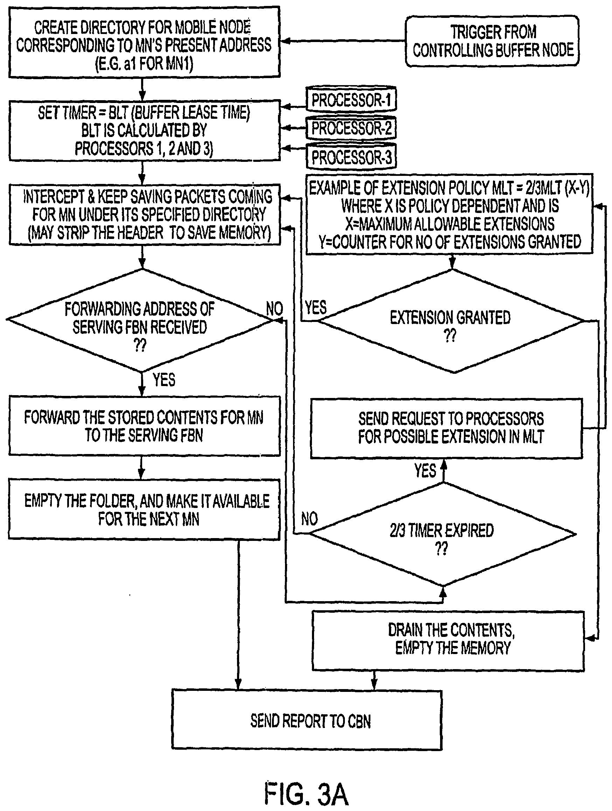

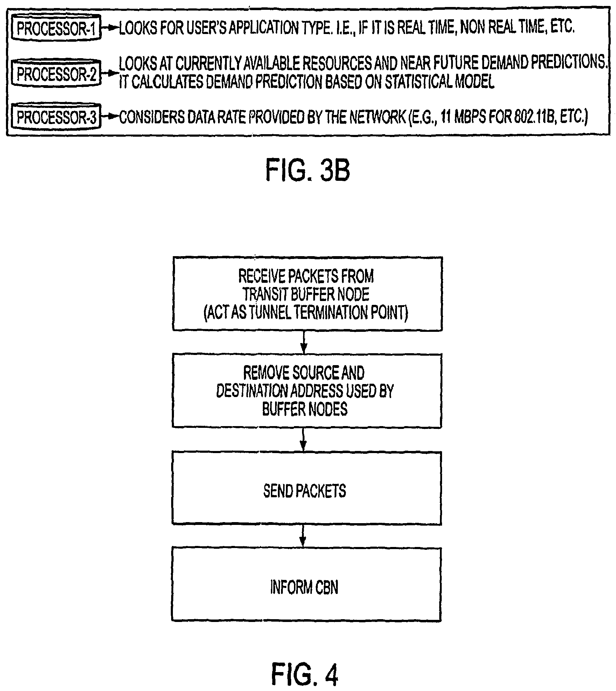

The TBN performs a variety of functions, which are detailed below. As shown in Fig. 3, one of the TBN's functions is receiving a message from the CBN indicating to the TBN that the MN is about to perform a handoff. In some instances, this message can be interpreted to be a "start buffer" trigger. Along with the previous information, the CBN also includes information about the MN's present address, which was extracted from the EAPOL-Start message received from the access point). Next, the TBN begins intercepting and starts saving all types of traffic packets bound for the MN. Additionally, the TBN does not explicitly negotiate buffering parameters or capabilities with the MN - as such, the TBN performs transparently and efficiently.

The TBN allocates appropriate Buffer Lease Time (BLT), which is the time the TBN can offer buffering service. BLT is determined by the TBN based on several factors: user application type (real time or non real time); currently available resources/near future demand resources (determined by demand prediction based on statistical modeling); and data rate provided by the network.

The TBN extends the BLT itself, if necessary. A BLT extension will be calculated by the TBN based on the above factors (user application type, currently available resources/near future demand resources, and data rate). The number of allowable extensions and allocated time for each extension may be governed by a policy, for example, instituted by a service provider. An example is shown in Fig. 3(a), where the extension policy is defined as BLT = 2/3BLT (x-y), where x is policy dependent and x = maximum allowable extensions and y = counter for number of extensions granted.

The TBN also runs algorithms to use the memory capability efficiently by using several available compression algorithms, or protocols. For example, the TBN creates a directory with a name corresponding to the MN's present address, saving its packets while stripping off the uniform information (e.g., source and destination address) from each packet, and reattaches the updated address header at the time of release. By running algorithms/protocols as detailed above, the TBN reserves a sufficient amount of memory for each application.

The TBN can receive a second message from the CBN that indicates that a handoff has occurred. The second message can also be interpreted as a "release buffer" trigger event. As a part of the second message to the TBN, the CBN will also include the MN's new CoA as well as the serving FBN address. The CBN obtained the MN's new CoA from the binding update sent by the previous network router, and the FBN's address from its own database mapped with the MN's new CoA. This FBN, responsible for flushing packets, is located in the network where the MN recently entered. When this message is received, the TBN will append the MN's new CoA with each packet and direct them to the FBN, which may occur in a FIFO (First In, First Out) manner.

The TBN can drain the buffer packets in the event the service is not delivered successfully to the MN. By clearing its memory of the unneeded buffer packets as soon as the TBN determines that a delivery is not possible, the TBN maximizes available memory for other packet deliveries to other MNs.

The TBN also stores the received packets according to the application. For example, if a time-sensitive application is involved, the TBN will prioritize accordingly, moving the application ahead of other applications that are not as time-sensitive. For example, three categories may be used, named "high priority packets", "medium priority packets", and "low priority packets". These packets would be handled by the TBN according to a predetermined policy or protocol. In the case of high priority packets, these would be the most time sensitive packets and would be delivered with the highest priority. Medium priority packets may be those with a number of allowable extensions and an allocated time for each extension is restricted (e.g., a one-time BLT restriction). Low priority packets are those that may tolerate delivery delays. In the event that buffer capacity is exhausted, these packets may be located or relocated first to another CBN. This combination or any other combination of these can be used to handle packet deliveries of different categories.

The TBN also directly assists the CBN in performing its management functions, such as providing the CBN with information about available capacity, used capacity, and predicted demand, as well as a service delivery report. The CBN will use this information provided by the TBN for load balancing and efficient buffering information.

Further, the TBN also informs the assisting CBN with information relative to its management functions, such as proving the CBN with information pertaining to available capacity, used capacity, and predicted demand. The CBN will use this information provided by the TBN for load balancing and efficient buffering information.

According to an embodiment of the present invention, the Flushing Buffer Node performs the following functions, which are also illustrated in Fig. 4. The FBN receives packets from the TBN, and acts as a tunnel destination point. Further, it decapsulates the packets it receives and immediately dispatches them to the access point (AP) for transmission to the MN. The FBN also receives packets from peer buffering nodes for delivery only and are intended for receiving packets from external entities, such as a correspondent node, application server, etc. However, the FBN can be configured to reflect a desired policy or fulfill a need within the network if necessary.

In another embodiment of the present invention, the CBN, upon receiving the destination address of the AP, (for which the MN requested pre-authentication and intends to move to), can issue a release buffer trigger message to the TBN to commence tunneling packets to the specific FBN. Thus, the TBN will reserve a provisional CoA, and the FBN will replace the provisional CoA with the original CoA communicated later by the TBN to the FBN. This process will greatly reduce the packet delivery time (also called "jitter") but also enable the FBN to utilize its storage capacity more efficiently. To further enhance security, IP addresses assigned to the CBN, TBN and FBN can either be statically or dynamically assigned. These addresses can be private and not visible externally.

According to another embodiment of the present invention, an ARIMA process is used as a method for predicting buffer resource demand. An ARIMA process is a type of Weiner process wherein the future value of a stochastic variable depends only on its present value. The ARIMA process includes an autocorrelation component, wherein the future value of a stochastic variable is based on its correlation to past values, and a moving average component that filters error measurements in past variable observations. By applying an ARIMA process, the TBN locally predicts the amount of buffering resources R(t) it requires as a reserve for buffering the packets for mobile nodes (MN).

The ARIMA process has several advantages which are beneficial for the present invention. One such advantage is in predicting the MN's buffering resource demand R(t) that allows CBNs to perform local prediction, without requiring communication with other CBNs. ARIMA processes rely on the principal that the future value of R(t) depends only on present and past values of R(t) irrespective of other variables. This improves efficiency and reliability and reduces cost and complexity by reducing unnecessary communications and accurately predicting buffer resource demand.

Another advantage of the ARIMA process is in predicting buffering resource demand R(t) that allows CBNs to determine the instantaneous buffering resource demand, rather than the average network resource demand, thereby providing a more precise and accurate prediction of future buffering resource demand.

Yet another advantage of the ARIMA process is that the prediction model uses two basic steps common to all stochastic prediction methods. The first step involves performing an identification and estimation phase wherein the necessary autoregressive and moving average variables "p" and "q", respectively, are identified and the actual autoregressive and moving average parameters for the ARIMA (p, 1, q) are estimated. The second step involves performing the forecasting phase, wherein the ARIMA (p, 1, q) model constructed in the identification and estimation phase is used to predict future buffering resource demand R(t) based on past observations of buffering resource demand.

As a result, the ARIMA (p, 1, q) model predicts the buffering resource demand and then the using the model to predict future demand, each CBN accurately, precisely, and efficiently predicts and reserves a sufficient amount of buffering resources.

As an example of the need for an accurate prediction process, to avoid packet loss during handoff of duration "t", it is necessary for the TBN to be able to buffer up to the value of "rt", where "r" is the transmission rate of the medium, and "t" represents the duration of the handoff. Therefore, for a transmission rate of 11 Mbps, and a handoff requiring 4 seconds, 44 Mb of buffer is required. As the transmission rate and handoff duration increases, the required buffer size also increases. Even in cases of a "fast handoff", substantial buffering is required, which necessitates an accurate prediction process.

### MN before Association to New AP

Referring now to Fig. 1, in Step 1, a mobile node (MN) is shown finding a new access point (AP) by receiving a beacon. A typical beacon frame carries the following information: supported rates of data flow (e.g., 11 Mbps for 802.11b, etc.); a service set identifier (SSID - belonging to a specific wireless LAN); capability information (requirements of stations that wish to belong to the LAN); beacon interval (time between transmissions); a timestamp (enabling synchronization among stations associated with an AP); parameter sets (e.g., information about specific signaling methods, etc.); and/or a traffic indication map (TIM).

In Step 2, shown in Fig. 1, a mobile node (MN), according to the 802.1 x standard, sends an EAPOL-Start (Extensible Authentication Protocol) message to the AP with which it is currently associated. This message is initiated by a MN that intends to move from jurisdiction of one AP to the jurisdiction of another AP and desires pre-authentication with the prospective AP. The EAPOL-Start message specifies its own address as well as the MAC (Media Access Control) address of the prospective AP contained in the beacon frame as the destination MAC address. In the present example, the MN initiates the EAPOL-Start message through its present AP (AP1 of Subnet-A in this example) to pre-authenticate itself with the prospective AP (AP1 of Subnet-B in this example) before actually associating with the prospective AP. The current AP forwards an EAPOL-Start frame to the new AP through, e.g., a backend wired LAN.

Further, a copy of the EAPOL-Start message is also forwarded to the CBN by MLME (MAC Layer Management Entity) in the AP. This message notifies the CBN that the MN is mobile and intends to continue the session, which also tells the CBN to initiate buffering service. The CBN then extracts the source AP information (AP1 of Subnet-A in this example), destination AP (AP1 of Subnet-B in this example), and the MN's addresses from the EAPOL-Start message, saves them in its database, and instructs the TBN (via the "start buffer" trigger) to intercept the packets destined for the specified MN and start saving them in memory. The TBN will continue saving packets until it receives the second instruction (via a "release buffer" trigger) from the CBN for flushing packets.

The sending of the EAPOL-Start message to the CBN should not be interpreted as a security risk, as it is the initial message sent to the AP to discover the MAC address of the authenticator. According an embodiment of the present invention, the AP authorizes the CBN for service provisionally after confirming the MN's credentials. The MN's credentials can be upgraded or modified according to the user's desire for a different quality of service.

In Step 3 of Fig. 1, the movement of the MN from Subnet-A to Subnet-B is shown. More specifically, the movement of the MN from the radio coverage of AP1 of Subnet-A to AP1 of Subnet-B.

In Step 4 of Fig. 1, the association of the MN with the AP is shown, using cipher keys as detailed in Step 2 above. In the example shown in Fig. 1, 802.1i cipher keys are also established between the new AP and the MN resulting from pre-authentication, unless 802.11f or IAPP (Inter-Access Point Protocol) is used between the new AP and the old AP. AP2 must contact the authentication or AAA server to authenticate the mobile station identically as was done during the initial authentication through the previous AP. As IEEE 802.1 x is designed to operate within a LAN, the applicability of IEEE 802.1 x pre-authentication is limited to intra-subnet handoff; however, if the mobile station is configured to be mobile, e.g., among multiple WLANs, the extended concepts of pre-authentication can be used.

### MN after Association to New AP

Once the MN is associated with the new AP, a notification is sent to the previous router AP (which had sent packets to the MN over the previous channel) informing it of the MN's new mobility binding. This mobility binding or "binding update" is allows for the MN to embark on Route Optimization as defined in the IETF MobilelPv6 standard. The main objectives of Route Optimization are: (1) to allow datagrams transmitted to the MN's previous router to be forwarded to its new CoA; (2) to allow any datagrams tunneled to the MN's previous router, from corresponding nodes with out-of-date binding cache entries for the MN, which are forwarded to the new CoA; and (3) to allow any resources consumed by the MN when linked to the previous router (such as radio channel reservations, buffer reservation, etc.), to be released immediately, instead of waiting for its registration lifetime to expire in due course. The binding update then immediately associates the MN's previous CoA with the MN's new CoA, and is authenticated using the IPv6 authentication header while maintaining the previous security level.

Further, the binding update will also be communicated to the CBN, which after receiving it, will extract the MN's new destination address, find the address of the FBN in its own database, and include this address in the release buffer trigger to the TBN for the flushing of packets to the FBN. The MN's new destination address is also duly mapped in the CBN's database. The TBN will respond to the CBN's actions by forwarding all packets to the FBN. The FBN will then decapsulate the packets sent by the TBN dispatch them to the new AP that will transmit them to the newly-arrived MN.

In one embodiment of the present invention, the binding update is required to be extended to the CBN. One way this can be accomplished is to offer buffering service to users for a subscription fee, using better Quality of Service (QoS) as a benefit. This subscription could be free, a flat rate, or other means of measurement, depending on the service provider's policies. In one example of a subscription-based service, the subscriber's credentials can be upgraded/modified to indicate that the subscriber desires better QoS (with minimal or no packet loss) when mobile. If so, then the binding update package will be slightly modified, using any of the reserved bits that are used to notify the CBN of the extension. Also, if the MN and BN are in the same IP subnet, the TBN can send the buffered packets locally to the MN using Address Resolution Protocol (ARP).

The present invention offers many advantages over the known wireless networks, including the following. Transparent buffering service: the MN is not required to solicit for service and waste time and energy in service parameters negotiating. A low signaling burden on the network: as the service is established without setting up a pre-service dialogue, thereby reducing the volume of signaling traffic on the network. Mobile node battery life extension: since the mobile node does not have to discover, solicit, negotiate, or conduct initial computation, the MN's battery life is extended that would otherwise be shortened. Immediate buffering initialization: the network service is offered, without advertising, seeks candidates, evaluates demand, determines the MN's demand against network limitations, and quickly offers service on the network. Efficient packet loss prevention: the complete architecture is managed, with transit and flushing buffer nodes, using prediction methods, to offer efficient service to the MN. Improved resource and network utilization: overall architecture design provides superior network resource utilization. Buffering nodes that communicate with each other internally, improving network security.

### Broad Scope of the Invention

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to". In this disclosure and during the prosecution of this application, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure, the following abbreviated terminology may be employed: "e.g." which means "for example."

## Claims

1. A wireless communications network having a managed buffer nodes architecture, comprising:
a controlling buffer node configured to perform managerial functions related to buffering of packets for a mobile node during handover from a first wireless access point in a first subnet to a second wireless access point in a second subnet;
a transition buffer node located within the first subnet, said transition buffer configured to hold data packets in transit based on instructions from the controlling buffer node; and
a flushing buffer node located within the second subnet, said flushing buffer node configured to receive data packets from the transition buffer node and to facilitate delivery of the data packets to the mobile node following the handover;
wherein the network is configured to provide a comprehensive buffering service to prevent data packet losses during handover and wherein the buffer nodes communicate with each other internally;
said managed buffer node architecture being configured to provide transparent buffering service for the mobile node during handover from the first wireless access point in the first subnet to the second wireless access point in the second subnet without the mobile node soliciting for the buffering service nor negotiating any buffering service parameters.

2. The network of claim 1, wherein the controlling buffer node is further configured to:
receive an EAPOL start message from the first wireless access point indicating that the mobile node intends to move to the second subnet;
extract addresses of the mobile node, the first wireless access point, and the second wireless access point from the handover start message from the EAPOL start message; and
transmit a start buffer message to the transition buffer node in the first subnet to intercept and save packets destined for the mobile node.

3. The network of claim 2, wherein the controlling buffer node is further configured to:
after the mobile node is associated with the second wireless access point and receives the mobile node's new destination address, transmit the mobile node's new destination address to the transition buffer node in the first subnet along with an address of the flushing buffer node in the second subnet for the transition buffer node in the first subnet to forward the saved packets to the flushing buffer node in the second subnet.

4. The network of claim 3, wherein the flushing buffer node in the second subnet is configured to facilitate delivery of the data packets to the mobile node by decapsulating the packets for the second wireless access point that transmits the packets to the mobile node in the second subnet.

5. The network of claim 1, wherein the controlling buffer node is configured to receive authorization from the first wireless access point for the buffering service after the first wireless access point confirms the mobile node's credentials.

6. The network of claim 1, wherein the flushing buffer node is configured to perform multiple functions comprising receiving the data packets from the transition buffer node, acting as a tunnel destination point, decapsulating the data packets it receives, and dispatching the data packets to the second access point for transmission to the mobile node.

7. The network of claim 1, wherein the controlling buffer node issues a release buffer command after receiving a destination address of the second access point.

8. The network of claim 1, wherein an autoregressive integrated moving average model predicts a buffering resource demand, which the network uses to predict future buffering resource demand.

9. The network of claim 1, wherein the buffering nodes wirelessly communicate with each other within the network preventing nodes outside of the network from communicating with the nodes.

10. The network of claim 1, wherein the controlling buffer node is configured to receive a start message, direct the transition buffer node to start buffering, receive a binding update, and direct the transition buffer node to flush data to the flushing buffer node.

11. The network of claim 1, wherein the transition buffer node is configured to allocate a buffer release time for which the transition buffer node will offer buffering services, the buffer lease time being determined by the transition buffer node based on factors including at least one of application type being run by the mobile node, available resources, demand prediction, and network data rate.

12. A method performed by a managed buffer nodes architecture in a wireless communications network, comprising:
a controlling buffer node performing managerial functions related to buffering of packets for a mobile node during handover from a first wireless access point in a first subnet to a second wireless access point in a second subnet;
a transition buffer node in the first subnet configured to hold data packets in transit based on instructions from the controlling buffer node; and
a flushing buffer node in the second subnet configured to receive data packets from the transition buffer node and configured to facilitate delivery of the data packets to the mobile node following the handover;
wherein the buffer nodes are configured to communicate with each other internally; and
wherein the method provides a transparent, comprehensive buffering service to prevent data packet losses during handover of the mobile node from the first wireless access point in the first subnet to the second wireless access point in the second subnet without the mobile node soliciting for the buffering service nor negotiating any buffering service parameters.

13. The method of claim 12, wherein performing managerial functions by the controlling buffer node includes:
receiving an EAPOL start message from the first wireless access point indicating that the mobile node intends to move to the second subnet;
extracting addresses of the mobile node, the first wireless access point, and the second wireless access point from the EAPOL start message; and
transmitting a start buffer message to the transition buffer node in the first subnet to intercept and save packets destined for the mobile node.

14. The method of claim 13, wherein performing managerial functions by the controlling buffer node also includes:
after the mobile node is associated with the second wireless access point and receives the mobile node's new destination address, transmitting the mobile node's new destination address to the transition buffer node in the first subnet along with an address of the flushing buffer node in the second subnet for the transition buffer node in the first subnet to forward the saved packets to the flushing buffer node in the second subnet.

15. The method of claim 14, wherein the flushing buffer node in the second subnet facilitates delivery of the data packets to the mobile node by decapsulating the packets for the second wireless access point that transmits the packets to the mobile node in the second subnet.

## Patentansprüche

1. Drahtlos-Kommunikationsnetzwerk, welches eine verwaltete Pufferknoten-Architektur aufweist, umfassend:
einen steuernden/regelnden Pufferknoten, welcher dazu eingerichtet ist, Verwaltungsfunktionen durchzuführen, welche mit einem Puffern von Paketen für einen mobilen Knoten während eines Handover von einem ersten Drahtlos-Zugangspunkt in einem ersten Subnetz zu einem zweiten Drahtlos-Zugangspunkt in einem zweiten Subnetz zusammenhängen;
einen Übergangs-Pufferknoten, welcher innerhalb des ersten Subnetzes angeordnet ist, wobei der Übergangs-Puffer dazu eingerichtet ist, auf Grundlage von Anweisungen von dem steuernden/regelnden Pufferknoten Datenakete im Transit zu halten; und
einen Durchgangs-Pufferknoten, welcher innerhalb des zweiten Subnetzes angeordnet ist, wobei der Durchgangs-Pufferknoten dazu eingerichtet ist, Datenpakete von dem Übergangs-Pufferknoten zu erhalten und ein Liefern der Datenpakete an den mobilen Knoten auf den Handover folgend zu ermöglichen;
wobei das Netzwerk dazu eingerichtet ist, einen umfassenden Pufferservice bereitzustellen, um Datenpaket-Verluste während des Handovers zu verhindern, und wobei die Pufferknoten intern miteinander kommunizieren;
wobei die verwaltete Pufferknoten-Architektur dazu eingerichtet ist, einen transparenten Pufferservice für den mobilen Knoten während des Handovers von dem ersten Drahtlos-Zugangspunkt in dem ersten Subnetz zu dem zweiten Drahtlos-Zugangspunkt in dem zweiten Subnetz bereitzustellen, ohne dass der mobile Knoten den Pufferservice nachfragt oder beliebige Pufferservice-Parameter verhandelt.

2. Netzwerk nach Anspruch 1, wobei der gesteuerte/geregelte Pufferknoten ferner dazu eingerichtet ist:
eine EAPOL-Startnachricht von dem ersten Drahtlos-Zugangspunkt zu erhalten, welche anzeigt, dass der mobile Knoten vorhat, sich in das zweite Subnetz zu bewegen;
Adressen des mobilen Knotens, des ersten Drahtlos-Zugangspunkts und des zweiten Drahtlos-Zugangspunkts aus der Handover-Startnachricht von der EAPOL-Startnachricht zu extrahieren; und
eine Start-Puffernachricht an den Übergangs-Pufferknoten in dem ersten Subnetz zu übertragen, um Pakete abzufangen und zu speichern, welche für den mobilen Knoten vorgesehen sind.

3. Netzwerk nach Anspruch 2, wobei der steuernde/regelnde Pufferknoten ferner dazu eingerichtet ist:
nachdem der mobile Knoten dem zweiten Drahtlos-Zugangspunkt zugeordnet ist und die neue Zieladresse des mobilen Knotens erhält, die neue Zieladresse des mobilen Knotens an den Übergangs-Pufferknoten in dem ersten Subnetz zusammen mit einer Adresse des Durchgangs-Pufferknotens in dem zweiten Subnetz zu übertragen, so dass der Übergangs-Pufferknoten in dem ersten Subnetz die gespeicherten Pakete an den Durchgangs-Pufferknoten in dem zweiten Subnetz weiterleitet.

4. Netzwerk nach Anspruch 3, wobei der Durchgangs-Pufferknoten in dem zweiten Subnetz dazu eingerichtet ist, ein Liefern von Datenpaketen an den mobilen Knoten zu ermöglichen, indem die Pakete für den zweiten Drahtlos-Zugangspunkt entkapselt werden, welcher die Pakete an den mobilen Knoten in dem zweiten Subnetz überträgt.

5. Netzwerk nach Anspruch 1, wobei der steuernde/regelnde Pufferknoten dazu eingerichtet ist, eine Autorisierung von dem ersten Drahtlos-Zugangspunkt für den Pufferservice zu erhalten, nachdem der erste Drahtlos-Zugangspunkt die Anmeldedaten des mobilen Knotens bestätigt.

6. Netzwerk nach Anspruch 1, wobei der Durchgangs-Pufferknoten dazu eingerichtet ist, mehrere Funktionen durchzuführen, umfassend ein Erhalten der Datenpakete von dem Übergangs-Pufferknoten, ein Wirken als ein Tunnel-Zielpunkt, ein Entkapseln der Datenpakete, die er erhält, und ein Absenden der Datenpakete an den zweiten Zugangspunkt zur Übertragung an den mobilen Knoten.

7. Netzwerk nach Anspruch 1, wobei der steuernde/regelnde Pufferknoten eine Freigabe-Pufferanweisung ausgibt, nachdem er eine Zieladresse des zweiten Zugangspunkts erhält.

8. Netzwerk nach Anspruch 1, wobei ein autoregressives integriertes Gleitdurchschnitt-Modell einen Pufferressourcen-Bedarf vorhersagt, welchen das Netzwerk verwendet, um einen zukünftigen Pufferressourcen-Bedarf vorherzusagen.

9. Netzwerk nach Anspruch 1, wobei die puffernden Knoten drahtlos miteinander innerhalb des Netzwerks kommunizieren, wobei Knoten außerhalb des Netzwerks gehindert werden, mit den Knoten zu kommunizieren.

10. Netzwerk nach Anspruch 1, wobei der steuernde/regelnde Pufferknoten dazu eingerichtet ist, eine Startnachricht zu erhalten, den Übergangs-Pufferknoten anzuleiten, ein Puffern zu starten, eine Verbindungs-Aktualisierung zu erhalten und den Übergangs-Pufferknoten anzuleiten, Daten an den Durchgangs-Pufferknoten durchzugeben.

11. Netzwerk nach Anspruch 1, wobei der Übergangs-Pufferknoten dazu eingerichtet ist, eine Puffer-Freigabezeit zu bemessen, für welche der Übergangs-Pufferknoten Pufferservices anbieten wird, wobei die Puffer-Belegungszeit durch den Übergangs-Pufferknoten auf Grundlage von Faktoren bestimmt wird, welche wenigstens eines aus einem von dem mobilen Knoten ausgeführten Anwendungstyp, verfügbaren Ressourcen, Bedarf-Vorhersage und Netzwerk-Datenrate umfassen.

12. Durch eine verwaltete Pufferknoten-Architektur durchgeführtes Verfahren in einem Drahtlos-Kommunikationsnetzwerk, umfassend:
ein Durchführen von Verwaltungsfunktionen durch einen gesteuerten/geregelten Pufferknoten im Zusammenhang mit einem Puffern von Paketen für einen mobilen Knoten während eines Handovers von einem ersten Drahtlos-Zugangspunkt in einem ersten Subnetz zu einem zweiten Drahtlos-Zugangspunkt in einem zweiten Subnetz;
einen Übergangs-Pufferknoten in dem ersten Subnetz, welcher dazu eingerichtet ist, auf Grundlage von Anweisungen von dem steuernden/regelnden Pufferknoten Datenpakete im Transit zu halten; und
einen Durchgangs-Pufferknoten in dem zweiten Subnetz, welcher dazu eingerichtet ist, Datenpakete von dem Übergangs-Pufferknoten zu erhalten und dazu eingerichtet ist, ein Liefern der Datenpakete an den mobilen Knoten auf den Handover folgend zu ermöglichen;
wobei die Pufferknoten dazu eingerichtet sind, miteinander intern zu kommunizieren; und
wobei das Verfahren einen transparenten, umfassenden Pufferservice bereitstellt, um Datenpaket-Verluste während des Handovers des mobilen Knotens von dem ersten Drahtlos-Zugangspunkt in dem ersten Subnetz zu dem zweiten Drahtlos-Zugangspunkt in dem zweiten Subnetz zu verhindern, ohne dass der mobile Knoten den Pufferservice nachfragt oder beliebige Pufferservice-Parameter verhandelt.

13. Verfahren nach Anspruch 12, wobei das Durchführen von Verwaltungsfunktionen durch den steuernden/regelnden Pufferknoten umfasst:
Erhalten einer EAPOL-Startnachricht von dem ersten Drahtlos-Zugangspunkt, welche anzeigt, dass der mobilen Knoten vorhat, sich in das zweite Subnetz zu bewegen;
Extrahieren von Adressen des mobilen Knotens, des ersten Drahtlos-Zugangspunkts und des zweiten Drahtlos-Zugangspunkts aus der EAPOL-Startnachricht; und
Übertragen einer Start-Puffernachricht an den Übergangs-Pufferknoten in dem ersten Subnetz, um Pakete abzufangen und zu speichern, welche für den mobilen Knoten bestimmt sind.

14. Verfahren nach Anspruch 13, wobei das Durchführen von Verwaltungsfunktionen durch den steuernden/regelnden Pufferknoten ebenfalls umfasst:
nachdem der mobile Knoten dem zweiten Drahtlos-Zugangspunkt zugeordnet worden ist und die neue Zieladresse des mobilen Knotens erhalten hat, Übertragen der neuen Zieladresse des mobilen Knotens an den Übergangs-Pufferknoten in dem ersten Subnetz zusammen mit einer Adresse des Durchgangs-Pufferknotens in dem zweiten Subnetz, so dass der Übergangs-Pufferknoten in dem ersten Subnetz die gespeicherten Pakete an den Durchgangs-Pufferknoten in dem zweiten Subnetz weiterleitet.

15. Verfahren nach Anspruch 14, wobei der Durchgangs-Pufferknoten in dem zweiten Subnetz ein Liefern der Datenpakete an den mobilen Knoten ermöglicht, indem die Pakete für den zweiten Drahtlos-Zugangspunkt entkapselt werden, welcher die Pakete an den mobilen Knoten in dem zweiten Subnetz überträgt.

## Revendications

1. Réseau de communication sans fil présentant une architecture de noeuds tampons gérés, comprenant :
un noeud tampon de commande configuré de manière à mettre en oeuvre des fonctions de gestion connexes à la mise en mémoire tampon de paquets pour un noeud mobile au cours d'un transfert intercellulaire d'un premier point d'accès sans fil dans un premier sous-réseau à un second point d'accès sans fil dans un second sous-réseau ;
un noeud tampon de transition situé dans le premier sous-réseau, ledit noeud tampon de transition étant configuré de manière à maintenir des paquets de données en transit sur la base d'instructions en provenance du noeud tampon de commande ; et
un noeud tampon de purge situé dans le second sous-réseau, ledit noeud tampon de purge étant configuré de manière à recevoir des paquets de données en provenance du noeud tampon de transition et à faciliter la distribution des paquets de données au noeud mobile suite au transfert intercellulaire ;
dans lequel le réseau est configuré de manière à fournir un service de mise en mémoire tampon exhaustif en vue d'empêcher des pertes de paquets de données au cours du transfert intercellulaire, et dans lequel les noeuds tampons communiquent entre eux en interne ;
ladite architecture de noeuds tampons gérés étant configurée de manière à fournir un service de mise en mémoire tampon transparent pour le noeud mobile au cours du transfert intercellulaire du premier point d'accès sans fil dans le premier sous-réseau au second point d'accès sans fil dans le second sous-réseau, sans que le noeud mobile ne sollicite le service de mise en mémoire tampon ni ne négocie des quelconques paramètres de service de mise en mémoire tampon.

2. Réseau selon la revendication 1, dans lequel le noeud tampon de commande est en outre configuré de manière à :
recevoir un message d'initiation de protocole « EAPOL start » en provenance du premier point d'accès sans fil, indiquant que le noeud mobile à l'intention de se déplacer vers le second sous-réseau ;
extraire les adresses du noeud mobile, du premier point d'accès sans fil et du second point d'accès sans fil du message d'initiation de transfert intercellulaire à partir du message d'initiation de protocole « EAPOL start » ; et
transmettre un message d'initiation de mémoire tampon au noeud tampon de transition dans le premier sous-réseau, en vue d'intercepter et d'enregistrer des paquets destinés au noeud mobile.

3. Réseau selon la revendication 2, dans lequel le noeud tampon de commande est en outre configuré de manière à :
dès lors que le noeud mobile a été associé au second point d'accès sans fil et qu'il reçoit la nouvelle adresse de destination du noeud mobile, transmettre la nouvelle adresse de destination du noeud mobile au noeud tampon de transition dans le premier sous-réseau conjointement avec une adresse du noeud tampon de purge dans le second sous-réseau afin que le noeud tampon de transition dans le premier sous-réseau achemine les paquets enregistrés vers le noeud tampon de purge dans le second sous-réseau.

4. Réseau selon la revendication 3, dans lequel le noeud tampon de purge dans le second sous-réseau est configuré de manière à faciliter la distribution des paquets de données au noeud mobile en désencapsulant les paquets pour le second point d'accès sans fil qui transmet les paquets au noeud mobile dans le second sous-réseau.

5. Réseau selon la revendication 1, dans lequel le noeud tampon de commande est configuré de manière à recevoir une autorisation en provenance du premier point d'accès sans fil concernant le service de mise en mémoire tampon, suite à la confirmation, par le premier point d'accès sans fil, du justificatif d'identité du noeud mobile.

6. Réseau selon la revendication 1, dans lequel le noeud tampon de purge est configuré de manière à mettre en oeuvre de multiples fonctions, y compris recevoir les paquets de données en provenance du noeud tampon de transition, agir en qualité de point destination de tunnel, désencapsuler les paquets de données qu'il reçoit, et délivrer les paquets de données au second point d'accès en vue d'une transmission au noeud mobile.

7. Réseau selon la revendication 1, dans lequel le noeud tampon de commande émet une commande de libération de mémoire tampon suite à la réception d'une adresse de destination du second point d'accès.

8. Réseau selon la revendication 1, dans lequel un modèle mixte intégré autorégressif et de moyennes mobiles prédit une demande de mise en mémoire tampon de ressources, que le réseau utilise en vue de prédire une future demande de mise en mémoire tampon de ressources.

9. Réseau selon la revendication 1, dans lequel les noeuds de mise en mémoire tampon communiquent mutuellement par voie hertzienne au sein du réseau, ce qui permet d'empêcher que des noeuds situés en dehors du réseau communiquent avec les noeuds.

10. Réseau selon la revendication 1, dans lequel le noeud tampon de commande est configuré de manière à recevoir un message d'initiation, à ordonner au noeud tampon de transition d'initier une mise en mémoire tampon, à recevoir une mise à jour de liaison, et à ordonner au noeud tampon de transition de purger des données dans le noeud tampon de purge.

11. Réseau selon la revendication 1, dans lequel le noeud tampon de transition est configuré de manière à affecter un temps de libération de mémoire tampon au cours duquel le noeud tampon de transition offrira des services de mise en mémoire tampon, le temps de libération de mémoire tampon étant déterminé par le noeud tampon de transition sur la base de facteurs inclut au moins un type d'application qui est en cours d'exécution par le noeud mobile, des ressources disponibles, une prédiction des demandes, et un débit de données de réseau.

12. Procédé mis en oeuvre par une architecture de noeuds tampons gérés dans un réseau de communication sans fil, comprenant :
un noeud tampon de commande configuré de manière à mettre en oeuvre des fonctions de gestion connexes à la mise en mémoire tampon de paquets pour un noeud mobile au cours d'un transfert intercellulaire d'un premier point d'accès sans fil dans un premier sous-réseau à un second point d'accès sans fil dans un second sous-réseau ;
un noeud tampon de transition situé dans le premier sous-réseau, configuré de manière à maintenir des paquets de données en transit sur la base d'instructions en provenance du noeud tampon de commande ; et
un noeud tampon de purge situé dans le second sous-réseau, configuré de manière à recevoir des paquets de données en provenance du noeud tampon de transition et configuré de manière à faciliter la distribution des paquets de données au noeud mobile suite au transfert intercellulaire ;
dans lequel les noeuds tampons sont configurés de manière à communiquer entre eux en interne ; et
dans lequel le procédé fournit un service de mise en mémoire tampon exhaustif et transparent en vue d'empêcher des pertes de paquets de données au cours du transfert intercellulaire du noeud mobile, du premier point d'accès sans fil dans le premier sous-réseau au second point d'accès sans fil dans le second sous-réseau, sans que le noeud mobile ne sollicite le service de mise en mémoire tampon ni ne négocie des quelconques paramètres de service de mise en mémoire tampon.

13. Procédé selon la revendication 12, dans lequel la mise en oeuvre de fonctions de gestion par le noeud tampon de commande comprend les étapes ci-dessous consistant à :
recevoir un message d'initiation de protocole « EAPOL start » en provenance du premier point d'accès sans fil, indiquant que le noeud mobile à l'intention de se déplacer vers le second sous-réseau ;
extraire les adresses du noeud mobile, du premier point d'accès sans fil et du second point d'accès sans fil du message d'initiation de protocole « EAPOL start » ; et
transmettre un message d'initiation de mémoire tampon au noeud tampon de transition dans le premier sous-réseau, en vue d'intercepter et d'enregistrer des paquets destinés au noeud mobile.

14. Procédé selon la revendication 13, dans lequel la mise en oeuvre de fonctions de gestion par le noeud tampon de commande comprend en outre les étapes ci-dessous consistant à :
dès lors que le noeud mobile a été associé au second point d'accès sans fil et qu'il reçoit la nouvelle adresse de destination du noeud mobile, transmettre la nouvelle adresse de destination du noeud mobile au noeud tampon de transition dans le premier sous-réseau conjointement avec une adresse du noeud tampon de purge dans le second sous-réseau afin que le noeud tampon de transition dans le premier sous-réseau achemine les paquets enregistrés vers le noeud tampon de purge dans le second sous-réseau.

15. Procédé selon la revendication 14, dans lequel le noeud tampon de purge dans le second sous-réseau facilite la distribution des paquets de données au noeud mobile en désencapsulant les paquets pour le second point d'accès sans fil qui transmet les paquets au noeud mobile dans le second sous-réseau.
